# EUROPÄISCHE PATENTANMELDUNG

(11) **EP 2 423 770 A2**
(43) Veröffentlichungstag der Anmeldung: **29.02.2012**
(21) Anmeldenummer: 11176680.4
(22) Anmeldetag: 05.08.2011
(51) Int. Cl.: G05B 19/10

(54) **Vorrichtung mit einem Drehschalter**

(30) Priorität: 31.08.2010 DE 102010036212
(71) Anmelder: SIEMENS AKTIENGESELLSCHAFT, 80333 München (DE)
(72) Erfinder: Gradl, Hans, 93158 Teublitz (DE); Widmann, Stefan, 92272 Freudenberg, OT Lintach (DE)

(57) **Zusammenfassung**

In einer Vorrichtung mit einem Drehschalter, der in eine Mehrzahl von Stellungen verbringbar ist, denen jeweils eine andere Funktion der Vorrichtung zugeordnet ist, wobei bei Einnehmen jeder Stellung jeweils ein anderes Eingangssignal einem Mikrocontroller (12') zugeführt wird, greift ein Firmwareprogramm auf eine Tabelle als externe Datenquelle zu, die unmittelbar Eingangssignale und Ausgangswerte einander zuordnet, also in einem Zug die Eingangssignale einer Schalterstellung zuordnet und die Schalterstellung einem Ausgangswert zuordnet.

## Beschreibung

Die Erfindung betrifft eine Vorrichtung nach dem Oberbegriff des Patentanspruchs 1 und ein Verfahren zum Betreiben einer solchen Vorrichtung.

Die Vorrichtung weist somit einen Drehschalter auf, der in eine Mehrzahl von Stellungen verbringbar ist. Jeder Stellung ist eine andere Funktion der Vorrichtung zugeordnet. Die Vorrichtung weist auch einen Mikrocontroller auf, der mit dem Drehschalter gekoppelt ist, damit im Betrieb der Vorrichtung bei Einnehmen jeder Stellung jeweils ein anderes Eingangssignal (das jeweils abstrakt einem anderen Eingangswert entspricht) dem Mikrocontroller zugeführt wird. In dem Mikrocontroller wird eine Firmware zum Ablauf gebracht. Bei jedem Eingangssignal bewirkt sie das Arbeiten der Vorrichtung gemäß einer zugehörigen Funktion. Dem Eingangssignal ist hierbei ein Ausgangswert zugeordnet, der von dem Mikrocontroller im Weiteren verwendet wird. Man spricht im Rahmen einer solchen Vorrichtung auch von einem so genannten Drehkodierschalter, weil die Eingangssignale als kodiert verstanden werden.

Bei bekannten Vorrichtungen der genannten Gattung erfolgt die Zuordnung von Ausgangswert zu Eingangssignal innerhalb der Firmware. Typischerweise geschieht dies zweistufig: Zunächst wird das Eingangssignal einer Schalterstellung zugeordnet, die Schalterstellung wird also anhand ihres zugehörigen Eingangssignals durch die Firmware erkannt. Die Zuordnung erfolgt anhand einer Dekodiertabelle bezüglich der Schalterstellung. Anschließend erfolgt zu der erkannten Schalterstellung die Zuordnung der Belegung anhand einer weiteren Dekodiertabelle. In der Regel sind beide Dekodiertabellen in die Firmware fest integriert, können also nicht ohne die Firmware geändert werden. Es kommt vor, dass die zweite Tabelle, die die Zuordnung der Belegung zur Schalterstellung definiert, außerhalb der Firmware abgelegt ist; dann wird von der Firmware auf diese Tabelle zugegriffen. Die Belegung legt fest, wie der Ausgangswert aussieht. Der Ausgangswert ist beispielsweise ein Schwellwert oder ein Vergleichswert für eine Funktionseinheit der Vorrichtung oder betrifft eine Verzögerungszeit etc.

Dadurch, dass im Stand der Technik zumindest diejenige Tabelle, die das Eingangssignal einer Schalterstellung zuordnet, Teil der Firmware ist, ist man beim Bau der Vorrichtung durch die Firmware auf eine vorbestimmte Art von Drehschalter festgelegt, man muss also stets die Schalter mit der selben Codierung (selbe Art von Eingangssignalen bei selber Stellung) verwenden. Will man dies nicht, dann muss man die Firmware neu gestalten, was zu Kosten für die Entwicklung der Firmware, für ihr Testen und insbesondere die so genannte Typprüfung (Prüfung auf die Erfüllung von Normen) führt.

Es ist Aufgabe der vorliegenden Erfindung, bei einer Vorrichtung der eingangs genannten Gattung für eine höhere Flexibilität zu sorgen, was die Verwendung unterschiedlicher Drehschalter mit unterschiedlicher Codierung angeht.

Die Aufgabe wird in einem Aspekt durch eine Vorrichtung mit den Merkmalen gemäß Patentanspruch 1 gelöst, und in einem anderen Aspekt durch ein Verfahren mit den Merkmalen gemäß Patentanspruch 5 gelöst.

Die erfindungsgemäße Vorrichtung ist somit dadurch gekennzeichnet, dass in einem dem Mikrocontroller zugeordneten Speicher eine Tabelle als bezüglich des Firmwareprogramms externe Datenquelle abgelegt ist, die unmittelbar die codierten Eingangssignale (Eingangswerte) und Ausgangswerte einander zuordnet, wobei das Firmwareprogramm ausgelegt ist, auf die Tabelle zuzugreifen.

Durch die Erfindung entfällt somit die Zweistufigkeit in der Zuordnung, und beide Stufen werden gleichzeitig mit Hilfe der firmwareexternen Tabelle ermöglicht. Dadurch, dass die Tabelle eine bezüglich des Firmwareprogrammes externe Datenquelle ist, kann die Tabelle geändert werden, ohne dass die Firmware geändert werden muss. Dadurch wird eine vollständige Änderung der Zuordnung von Eingangssignalen zu Ausgangssignalen möglich, ohne dass eben die Firmware geändert werden muss. Somit ist eine höhere Flexibilität gegeben, denn es lässt sich ein anderer Typ von Drehschaltern, unter Änderung der Codierungsart, verwenden, ohne dass die Firmware ausgetauscht werden muss; vielmehr genügt es, eine andere Tabelle in den Speicher abzulegen.

Bevorzugt wird als Speicher zur Aufnahme der Tabelle der selbe Speicher verwendet, in dem das Firmwareprogramm bzw. selbiges bestimmender Programmcode abgelegt ist. In diesem Falle ist der eine Speicherbereich für den Programmcode reserviert, der nicht geändert wird, und ein anderer Speicherbereich dient zur Aufnahme der Tabelle, die variabel festgelegt wird.

In an sich bekannter Weise kann der Speicher ein Festwertspeicher sein, wobei er vorzugsweise ein EEPROM ist vorzugs― weise ein Flash-EEPROM (Flash-Speicher).

Bevorzugte Anwendung findet die Erfindung dann, wenn als Vorrichtung ein Schutzschaltgerät vorgesehen ist, insbesondere ein Leistungsschalter (oder auch ein Leitungsschutzschalter oder Fehlerstromschalter).

Bei dem erfindungsgemäßen Verfahren zum Betreiben einer Vorrichtung mit einem Drehschalter in Abhängigkeit von einer Stellung desselben ist erfindungsgemäß vorgesehen, dass ein in einem Mikrocontroller ablaufendes Firmwareprogramm ein aufgrund eines Einnehmens der Stellung erzeugtes Eingangssignal für den Mikrocontroller anhand einer in einem Speicher außerhalb eines Speicherbereichs des Firmwareprogramm abgelegten Tabelle unmittelbar einem Ausgangswert zuordnet, also in einem Zuge das Eingangssignal einer Stellung des Drehschalters und gleichzeitig die Stellung des Drehschalters dem Ausgangswert zuordnet, und ferner bewirkt, dass die Vorrichtung gemäß der eingenommenen Stellung betrieben wird.

Durch das erfindungsgemäße Verfahren ist die gewünschte höhere Flexibilität gegeben.

Nachfolgend wird die Erfindung anhand einer bevorzugten Ausführungsform unter Bezug auf die Zeichnung näher erläutert, in der
- FIG 1: in schematischer Darstellung eine Vorrichtung des Standes der Technik zeigt, und
- FIG 2: zeigt wie die Vorrichtung gemäß FIG 1 arbeitet;
- FIG 3: in schematischer Darstellung eine Vorrichtung gemäß einer Ausführungsform der Erfindung zeigt; und
- FIG 4: zeigt, wie die Vorrichtung gemäß dieser Ausführungsform arbeitet.

Ein Leistungsschalter 100 gemäß dem Stand der Technik weist einen Dekodierschalter 10 auf; dieser ist in viele Stellungen verbringbar. Der Drehschalter 10 ist mit einem Mikrocontroller 12 gekoppelt. In dem Mikrocontroller 12 läuft ein Firmwareprogramm ab, zu dem der Code in einem Speicherbereich 14 eines Flash-Speichers 16 abgelegt ist.

Es gibt vier Kontakte A, B, C, D, und bei unterschiedlichen Schalterstellungen sind jeweils unterschiedliche der Kontakte A, B, C, D geöffnet ("O" wie "open") oder geschlossen ("C" wie "closed"). Daraus ergibt sich ein binärer Code. Bei einer bestimmten Schalterstellung sei nun der Code "OCOC" gegeben. Der Mikrocontroller 12 erhält somit dieses binäre Eingangssignal. In der Firmware, also im Speicherbereich 14 des Flash-Speichers 16, ist nun eine Dekodiertabelle abgelegt, anhand derer die Schalterstellung für den Code "OCOC" rekonstruierbar ist. Beispielsweise ist dies die Schalterstellung "1". In der Firmware ist zusätzlich eine Dekodiertabelle abgelegt, die die Schalterstellung einer Belegung zuordnet, beispielsweise ist hier die Belegung "200" der Schalterstellung "1" zugeordnet. Daraus ergibt sich dann unmittelbar die Verwendung, wobei in der Firmware für die Belegung "200" eine festgelegte Funktion für den Drehschalter 10 zugeordnet ist. Beispielsweise kann die Zahl "200" die Stromstärke angeben, ab der der Leistungsschalter "100" auslösen soll. Die Ports 18a, 18b veranschaulichen abstrakt die Außenwirkung des Mikrokontrollers 12. Diese ist bei jedem Eingangssignal und damit Ausgangswert der zweiten Tabelle unterschiedlich.

Da die Dekodiertabellen beide in der Firmware abgelegt sind, lässt sich die Codierung des Drehschalter, also die Zuordnung eines Codes mit Verwendung der Symbole "O" und "C" zu einer Schalterstellung, nicht ohne weiteres ändern, nämlich nicht ändern, ohne dass gleichzeitig die Firmware abgeändert wird. Damit ist man beim Bau des Leistungsschalters 100 auf einen Drehschalter 10 mit einer vorbestimmten Codierung festgelegt.

Dies wird durch die Erfindung überwunden.

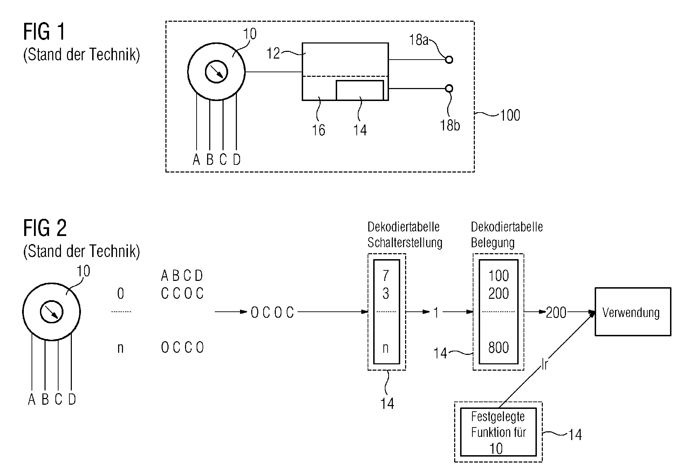

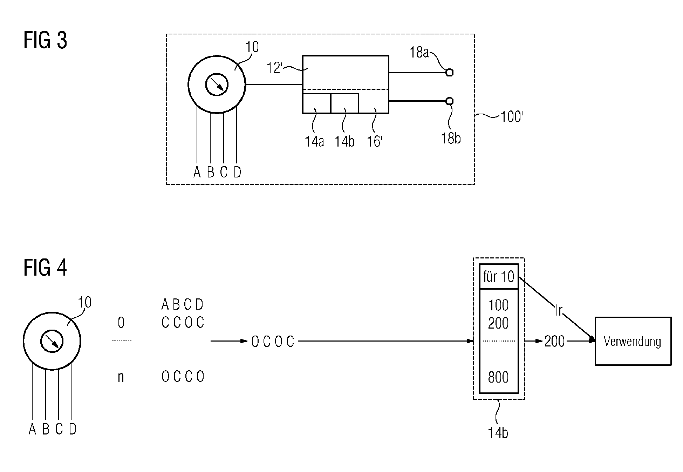

FIG 3 zeigt einen Leistungsschalter 100' der sich vom Leistungsschalter 100 im Mikrocontroller 12' unterscheidet. Unterschiedlich ist insbesondere, dass zwei Speicherbereiche 14a und 14b eines Flashspeichers 16' vorgesehen sind, wobei in dem einen Speicherbereich 14a der Code für die Firmware abgelegt ist, im anderen Speicherbereich 14b eine Tabelle abgelegt ist. Diese Tabelle weist in einem Zuge einem Code bezüglich der Kontakte A, B, C, D eine Schalterstellung zu und der Schalterstellung die Belegung zu, also unmittelbar einem Code eine Belegung zu. Dies ist anhand von FIG 4 ersichtlich, die der FIG 2 entspricht. Es gibt nur eine Tabelle, die dem Code "OCOC" die Belegung "200" für den Drehschalter 10 zuordnet, und daraus ergibt sich unmittelbar die Verwendung. Die Firmware greift unmittelbar auf die Tabelle zu. Zu diesem Zweck umfasst sie geeignete Zeiger.

Vorteil dieser Maßnahme ist es, dass ohne Änderung des Codes für die Firmware die Tabelle im Speicherbereich 14b geändert werden kann. Man kann somit den Drehschalter 10 austauschen durch einen Drehschalter mit anderer Codierung und muss dann lediglich die Tabelle austauschen, und nicht etwa die Firmware neu programmieren.

## Patentansprüche

1. Vorrichtung (100') mit einem Drehschalter (10), der in eine Mehrzahl von Stellungen verbringbar ist, denen jeweils eine andere Funktion der Vorrichtung (100') zugeordnet ist, wo― bei im Betrieb der Vorrichtung (100') bei Einnehmen jeder Stellung jeweils ein anderes Eingangssignal einem Mikrocontroller (12') zugeführt wird, in dem ein Firmwareprogramm zum Ablauf gebracht wird bzw. ist, das bei jedem Eingangssignal über die Definition eines zugehörigen Ausgangswerts ein Arbeiten der Vorrichtung gemäß der zugehörigen Funktion bewirkt,
**dadurch gekennzeichnet, dass**
in einem dem Mikrocontroller (12') zugeordneten Speicher (14b) eine Tabelle als bezüglich des Firmwareprogramms externe Datenquelle abgelegt ist, die unmittelbar Eingangssignale und Ausgangswerte einander zuordnet, und dass das Firmwareprogramm ausgelegt ist, auf die Tabelle zuzugreifen.

2. Vorrichtung nach Anspruch 1,
**dadurch gekennzeichnet, dass**
das Firmwareprogramm bestimmender Programmcode in dem selben Speicher (16') abgelegt ist, aber in einem anderen Speicherbereich (14a) als der Speicherbereich (14b), in dem die Tabelle abgelegt ist.

3. Vorrichtung (100') nach Anspruch 1 oder 2,
**dadurch gekennzeichnet, dass**
der Speicher (16') ein Festwertspeicher, vorzugsweise ein EEPROM, besonders vorzugsweise ein Flash-EEPROM ist.

4. Vorrichtung nach einem der Ansprüche 1 bis 3, die als Schutzschaltgerät, vorzugsweise als Leistungsschalter ausgeführt ist.

5. Verfahren zum Betreiben einer Vorrichtung (100') mit einem Drehschalter (10) in Abhängigkeit von einer Stellung desselben,
**dadurch gekennzeichnet, dass**
ein in einem Mikrocontroller (12') ablaufendes Firmwareprogramm einem aufgrund eines Einnehmens der Stellung erzeugten Eingangssignal für den Mikrocontroller anhand einer in einem Speicher (14b) außerhalb eines Speicherbereichs (14a) für Code für das Firmwareprogramm abgelegten Tabelle unmittelbar einen Ausgangswert zuordnet und in der Folge dadurch bewirkt, dass die Vorrichtung (100') gemäß der eingenommenen Stellung betrieben wird.
